# EUROPEAN PATENT SPECIFICATION

(11) **EP 3 306 866 B1**
(45) Date of publication and mention of the grant of the patent: **03.06.2020**
(21) Application number: 16799171.0
(22) Date of filing: 22.04.2016
(51) Int. Cl.: H04L 12/58, H04L 29/08, H04L 12/24, H04L 12/875, H04M 3/42, H04L 29/06, H04L 12/911

(54) **MESSAGE PROCESSING METHOD, DEVICE AND SYSTEM**
VERFAHREN, VORRICHTUNG UND SYSTEM ZUR NACHRICHTENVERARBEITUNG
PROCÉDÉ, DISPOSITIF ET SYSTÈME DE TRAITEMENT DE MESSAGES

(30) Priority: 25.05.2015 CN 201510268806
(43) Date of publication of application: 11.04.2018
(73) Proprietor: Alibaba Group Holding Limited, Grand Cayman (KY)
(72) Inventor: HUANG, Mengjun, Hangzhou 310099 (CN)
(74) Representative: Conroy, John
(86) International application number: PCT/CN2016/080018
(87) International publication number: WO 2016/188282

(56) References cited:
- CN-A- 1 747 454
- CN-A- 101 035 013
- CN-A- 101 547 198
- CN-A- 102 404 786
- JP-A- 2010 191 601
- US-A1- 2002 078 214
- US-A1- 2009 232 103

## Description

### Technical Field

The present application relates to the field of computer communication information processing, and in particular, to a message processing method, apparatus and system.

### Background Art

With rapid development of the Internet, there is a clear trend of increasing accesses to servers of Internet applications in many fields. Service systems on servers need to have certain service processing capability to rapidly and accurately process messages of calling parties accessing the servers.

Generally, when a service system of a server is called, the processing capability of the system is always limited, and the number of service messages of a calling party that need to be processed in a called party system and generation time of the service messages are not fixed. For example, if one or more calling parties output multiple service messages almost simultaneously within a short time to access a called party, this may have a transient impact on the called party. Frequent and sudden services with excessive accesses may even lead to serious consequences such as message blocking and system crash of a service system of the called party. In order to guarantee stable running of the service system of the called party, a concurrency control mechanism is generally adopted in the prior art to control service processing flow of the called party.

The concurrency control mechanism generally refers to setting a maximum number of concurrent links that can be maintained between a calling party and a called party during intersystem calling, and refusing to create a new link when a new link request appears and it is found that the number of current links has exceeded the set maximum number of concurrent links. In some application scenarios, such as a cluster mode, when multiple calling parties access a called party, a concurrency control mechanism is adopted to control a maximum number of concurrent links that can be maintained between the calling parties and the called party. However, the calling parties compete for service message sending opportunities per unit time, which easily causes a request failure and makes it necessary to repeat request sending constantly; when a new service message is generated, on the other hand, the calling parties will apply for sending with a service node. In an existing concurrency control mechanism, a service flow processed by the called party is mainly controlled at a counting control node according to the service processing capability of the called party, while service messages output by a calling party are not limited. The calling parties may output service messages at different frequencies especially in the case of high concurrency in the cluster mode, and after being generated, these service messages all need to be uniformly sent at the counting control node. This undoubtedly leads to a greater burden to the counting control node, resulting in a problem of performance bottleneck of service message processing at a single node, thereby reducing the overall message processing efficiency.

In the cluster mode, if the service systems of the calling parties are in an application scenario where each stream in one batch needs to access the called party system, there usually are multiple streams (e.g., equal to the number of concurrency: 100) accessing the called party system almost at the same time and then being released almost at the same time after processing. In an actual application scenario, different calling parties may generate high-concurrency service messages in different time periods; sometimes multiple calling parties may be concurrent in a same time period or adjacent time periods, and sometimes the calling parties may be all idle. This may result in a wavelike or spikelike system running performance, which is not conducive to the stable running of the systems of the calling parties.

The concurrency control mechanism set between a calling party and a called party adopted in the prior art cannot control message output of a system of the calling party, and reduces stable running performance of a called system. In some application scenarios, for example, in a cluster mode, service message processing performance of a counting control node is also reduced.

US 2002/0078214 A1 describes a method and system for controlling a load on a computer.

JP2010191601A describes a numbered ticket issuing server.

### Summary of the Invention

The present invention is defined by the claims. An objective of the present application is to provide a message processing method, apparatus and system, which can make a calling party stably and uniformly output service messages, improve the running stability of a called party system, and enhance service message processing performance and efficiency of a called party or a link control node. The message processing method and apparatus according to the present application can maximize utilization of service processing capability of the called party and improve resource utilization without going beyond the maximum service processing capability of the called party system.

The message processing method, apparatus and system according to the present application are implemented as follows:
A message processing method, the method including:
calculating, by a calling party, a sending time length for sending a service message, and applying for an occupation time period from a control node according to the sending time length;
upon reception of an application message for the occupation time period from the calling party, determining, by the control node, an application result of the occupation time period of the calling party according to a predetermined rule, and feeding the application result back to the corresponding calling party;
calculating, by the calling party, a sending time of the service message when a received application result of the occupation time period is success;
applying, by the calling party, for a sending token of the service message from the control node when the calling party monitors that the sending time of the service message is exceeded;
upon reception of an application message for the sending token from the calling party, determining, by the control node, an application result of the sending token of the calling party according to whether the maximum service processing capability of a called party is reached, and feeding the application result back to the corresponding calling party; and
sending, by the calling party, the service message of which the sending token is successfully applied for when the received application result of the sending token of the service message is success.

A message processing apparatus the apparatus including:
a message client terminal configured to: send to a control terminal a first application message for an occupation time period set based on a sending time length; calculate a sending time of a service message based on a received message indicating that an application result of the occupation time period is success; monitor whether a current time exceeds the sending time of the service message, and when monitoring that the current time exceeds the sending time, send to the control terminal a second application message of applying for a sending token of the service message; and send the service message of which the sending token is successfully applied for based on a received message indicating that an application result of the sending token is success; and
the control terminal configured to: receive the first application message and the second application message sent by the message client terminal; allocate an occupation time period of the service message to the occupation time period in the first application message according to a predetermined rule; allocate a sending token to the service message in the second application message according to a current service flow and the maximum service processing capability of a called party; and send application results of the first application message and the second application message to the message client terminal.

The message processing method and apparatus according to the present application can apply for an occupation time period for a service message, set a corresponding sending time for each service message, and send the service message only after a sending token is applied for. In this way, output of service messages of a calling party can be controlled, achieving uniform and stable output of service messages, which can improve the running stability of a called party system. In the present application, the calling party can maximize output of service messages without going beyond the maximum service processing capability of a called party, make full use of the maximum processing capability of the called party system, and improve the utilization of system resources. At the same time, due to the control over output of the calling party, performance single-point and bottleneck problems in a cluster mode can be avoided.

### Brief Description of the Drawings

In order to describe the technical solutions in the embodiments of the present application or in the prior art more clearly, the accompanying drawings to be used in the descriptions about the embodiments or the prior art will be briefly introduced in the following. It is apparent that the accompanying drawings in the following descriptions are merely some embodiments described in the present application. Those of ordinary skill in the art can also obtain other accompanying drawings according to these accompanying drawings without making creative efforts.
FIG. 1 is a schematic flowchart of an embodiment of a message processing method according to the present application;
FIG. 2 is a schematic flowchart of an embodiment of a message processing method according to the present application;
FIG. 3 is a schematic flowchart of another embodiment of a message processing method according to the present application;
FIG. 4 is a schematic flowchart of another embodiment of a message processing method according to the present application;
FIG. 5 is a schematic flowchart of an embodiment of a message processing method according to the present application;
FIG. 6 is a schematic flowchart of another embodiment of a message processing method according to the present application;
FIG. 7 is a schematic flowchart of another embodiment of a message processing method according to the present application;
FIG. 8 is a schematic diagram of a modular structure of an embodiment of a message processing apparatus according to the present application;
FIG. 9 is a schematic diagram of a modular structure of an embodiment of a calculation module in the message processing apparatus according to the present application;
FIG. 10 is a schematic diagram of a modular structure of another embodiment of the message processing apparatus according to the present application;
FIG. 11 is a schematic diagram of a modular structure of another embodiment of the message processing apparatus according to the present application;
FIG. 12 is a schematic diagram of a modular structure of an embodiment of the message processing apparatus according to the present application;
FIG. 13 is a schematic diagram of a modular structure of another embodiment of the message processing apparatus according to the present application;
FIG. 14 is a schematic diagram of a modular structure of another embodiment of the message processing apparatus according to the present application; and
FIG. 15 is a schematic diagram of a modular structure of a message processing system according to the present application.

### Detailed Description

To make those skilled in the art better understand the technical solutions in the present application, the technical solutions in the embodiments of the present application will be clearly and completely described in the following with reference to accompanying drawings in the embodiments of the present application. It is apparent that the embodiments described are merely some of rather than all of the embodiments of the present application. The scope of the present application is defined by the appended claims.

The present application can be described by taking message transfer between a calling party and a called party in a cluster mode as an application scenario. Definitely, the message processing method according to the present application is not limited to message exchange between the calling party and the called party in the cluster mode, and the message processing method according to the present application is also applicable to application scenarios of message exchange between other multiple terminals or different applications on a same terminal. The cluster may generally refer to a set of computers independent of each other and interconnected via a network. The computers make up a group, and may be a distributed network working group. One or more or all of the computers in the cluster may provide open services externally as a server, and exchange information with computers outside the cluster. In some application scenarios, multiple computers in the cluster may serve as a calling party to send service messages to other computers in the cluster for processing. In this case, the other computers in the cluster which receive the service messages may respond correspondingly as a called party.

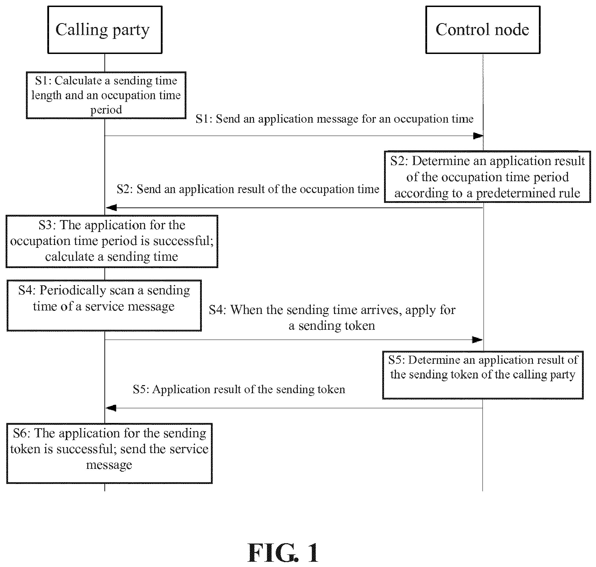

It should be noted that the calling party, the called party and the like in the method of the present application may be computer terminals in the cluster mode, or applications on a terminal, or functional modules on a terminal. The message processing method according to the present application is described in detail in the following with reference to the accompanying drawings by taking multiple server terminals in a cluster mode as an example. FIG. 1 is a method flowchart of an embodiment of a message processing method according to the present application. As shown in FIG. 1, the method may include:
S1: A calling party calculates a sending time length for sending a service message, and applies for an occupation time period from a control node according to the sending time length.

When generating a stream service and needing to send a service message, the calling party may calculate a sending time required for completing sending of the service message. Generally, the generating, by the calling party, a service message usually may include generating multiple service messages that belong to a same batch or a same service stream (e.g., order messages collected and aggregated periodically), and the service messages generally need to access a called party in a relatively concentrated time period. The calling party may calculate a sending time length required for completing sending of all service messages in a batch of the calling party according to a sending interval of a single service message. Definitely, the calling party may also send service messages not according to the batch or service stream, and in some application scenarios, it is also possible to send all to-be-sent service messages in the current calling party, or send all current to-be-sent service messages after periodic scanning.

As described above, the sending time length may be calculated according to the sending interval of a single service message. If the calling party needs to send 100 service messages and sends one service message at an interval of 10 milliseconds, the sending time length calculated may be 990 milliseconds. After the sending time length is calculated, an occupation time period required for sending the service messages may be applied for from a control node according to the sending time length. Specifically, the step of applying for an occupation time period from a control node according to the sending time length may include:
S101: A latest occupation moment of the control node is acquired, and a first application message that takes the acquired latest occupation moment plus the sending time length as the occupation time period is sent to the control node.

The control node may generally include a data processing functional module set for guaranteeing that the number of concurrent links established with the called party does not exceed a set maximum number of concurrent links, and may include a database or a control unit. The control node in the present application may include a distributed counting node, which, for example, may specifically be Tair, memcache, or the like. The control node may be arranged in a service message access interface of the called party, and may also be arranged in a uniform message output interface of the calling party or serve as a separate service unit to control message sending of the calling party. In this embodiment, the control node may be employed as a separate service unit. When needing to send a service message, the calling party may first apply for sending resources from the control node, and the control node allocates resources to the calling party according to network resources, a service state of the calling party or the called party, and so on.

It is generally necessary to set information about an occupation moment in the control node. The occupation moment may indicate that time before the occupation moment of the control node has been allocated and occupied, and time after the occupation moment is available for occupation application. The occupation moment may be updated each time an occupation time period is allocated, to guarantee that a correct, timely and latest occupation moment is provided. For example, if a current moment is 0s and the occupation moment is 100s, it may indicate that an application for sending a service message cannot be made within a time from the current moment 0s to the occupation moment 100s, and the calling party may apply for an occupation time period for sending a service message after the occupation moment 100s. Therefore, in this embodiment, a latest occupation moment T0 of the control node can be acquired, and the latest occupation moment plus the sending time length TL obtained through calculation is taken as an occupation time period required by the calling party to send the service message. Then, a first application message can be sent to the control node, and the first message may include request information of the occupation time period T0+TL.

Definitely, when the calling party fails to apply for the occupation time period, for example, for an occupation time period 100s to 110s (the acquired occupation moment 100s + the sending time length 10s) that is applied for, another calling party has first applied for and occupied a time period till the moment 105s, in this case, the calling party may acquire a latest occupation moment 105s, and then according to the latest occupation moment 105s, continue to send a first application message for an occupation time period of 105s to 115s (the acquired latest occupation moment 105s + the sending time length 10s) to the control node.

The calling party may calculate a sending time length for sending a service message, and may apply for an occupation time period from a control node according to the sending time length.

S2: Upon reception of an application message for the occupation time period from the calling party, the control node determines an application result of the occupation time period of the calling party according to a predetermined rule, and feeds the application result back to the corresponding calling party.

The control node, for example, a TAIR counting node, may be a processing unit for sending time resource allocation. Upon reception of one or more application messages for an occupation time period sent by one or more calling parties, the control node may process the application messages according to a set predetermined rule, to determine one or more application results of the occupation time period of the one or more calling parties. Generally, a latest occupation moment of the control node may be information disclosed to all calling parties, and multiple calling parties may apply for an occupation time period according to the disclosed latest occupation moment. When receiving multiple occupation time period application messages sent according to the latest occupation moment, the control node may allocate a sending time after the latest occupation moment to the calling party of which the application message is first received by employing a predetermined rule of preferentially processing the first received application message. Correspondingly, after the calling party of which the application message is first received applies for an occupation time period successfully, other application messages that are also sent according to the latest occupation moment successfully applied for are failed. The control node may feed application results of the calling parties back to the corresponding calling parties.

In a specific application scenario, for example, the latest occupation moment acquired by three calling parties C1, C2 and C3 is 100s, occupation time periods that the three calling parties apply for from the control node are 100s to 110s, 100s to 130s and 100s to 115s, respectively. The control node first receives an occupation time period application message from the calling party C1 and then allocates a time resource from 100s to 110s to the calling party C1 for use. Then an application result of the occupation time period of the calling party C1 is that the application is successful. In this case, the control node may update the latest occupation moment 100s to 110s according to the number of recent application messages of C1. At the same time, after receiving the application messages of the calling parties C2 and C3, the control node finds that the occupation time period applied according to the acquired occupation moment 100s has been occupied, and the application result is that the application fails. The calling parties C2 and C3 may acquire a latest occupation moment 110s, and then may apply for occupation time periods again from the control node according to the latest occupation moment 110s.

The foregoing embodiment is an application scenario in which the control node processes application messages in a cluster mode. Definitely, the predetermined rule of processing occupation time period applications of the calling parties may also be set according to other application scenarios or requirements. For example, an application message with a high priority may be preferentially processed according to priorities of occupation time period application messages, or an application message first received may be processed, or the like. A time period is allocated to a processed application message when the occupation time period therein is not occupied.

Upon reception of an application message for the occupation time period from the calling party, the control node determines an application result of the occupation time period of the calling party according to a predetermined rule; and the control node feeds the application result back to the corresponding calling party.

S3: The calling party calculates a sending time of the service message when a received application result of the occupation time period is success.

If the application result fed back by the control node and received by the calling party is that the time occupation application for the occupation time period is successful, a sending time of each service message in a batch currently to be sent by the calling party may be calculated. If the occupation time period applied for is 100s to 110s, 100 service messages need to be sent within the occupation time period, and a sending time of each message is 100 milliseconds, then it may be calculated that a sending time of the first service message is 100s, a sending time of the second service message is 100.1s, ..., and a sending time of the 100^{th} service message is 109.9s.

After calculating the sending time of each service message, the calling party may store the sending time in a local message sending queue. Generally, the sending queue may be a data storage and processing unit such as a stack or process that sets sending priorities according to a storage sequence.

As described previously, if the application result of the occupation time period received by the calling party is failure, an occupation time period may be applied for again according to the acquired latest occupation moment of the control node. Definitely, it is also possible to set that an occupation time period is applied for again after a period of time, or prompt information is sent after the number of times of application failure reaches a threshold, to perform corresponding processing.

When a received application result of the occupation time period is success, the calling party may calculate a sending time of each service message, and may put the service message in a sending queue. In this embodiment, a state of the service message in the sending queue may also be set as a to-be-sent state. In this embodiment of the present application, by applying for an occupation time period for a service message of the calling party and setting a sending time for the service message, the service messages of the calling party may be effectively output at a fixed frequency.

S4: The calling party applies for a sending token of the service message from the control node when monitoring that the sending time of the service message is exceeded.

The calling party may periodically monitor a service message of which the occupation time period is successfully applied for, and may apply for a sending token from the control node when monitoring that a generation time of the service message arrives, to acquire a service message sending instruction. For example, in the foregoing cluster mode embodiment, a process may be set to scan the sending time of the to-be-sent service message in the sending queue at an interval of 1s, and when it is learned through scanning that the sending time of the to-be-sent service message exceeds the current moment, a concurrency token may be applied for from the TAIR counting node.

It should be noted that, in this embodiment, the sending time of the service message being exceeded or the arrival of the sending time of the service message may include that the current time is the same as the sending time, or that the current time is greater than the sending time. For example, when the sending time is scanned at an interval of 1s, it is learned through scanning that the current time 99s reaches a sending time 99s of a service message MSG_A but has not reached a sending time 99.9s of a service message MSG_B. In this case, the calling party may first apply for a concurrency token of the service message MSG_A. After 1s, the current time is 100s, it is learned through scanning that the current time has exceeded the sending time 99.9s of the service message MSG_B, and in this case, a concurrency token of the service message MSG_B can be applied for. Definitely, an expiration time by which the current time is greater than the sending time may also be set, and for a service message after the expiration time, a sending token may no longer be applied for. For example, the expiration time set as 30s may indicate that when it is learned through scanning that the current time is 30s greater than the sending time of the service message, for the service message that is 30s earlier than the current time, a sending token may no longer be applied for. The service message for which a sending token is no longer applied for may also be processed in other specified manners.

The calling party may periodically monitor and scan a sending time of a service message, and apply for a sending token from the control node when monitoring that a current time exceeds the sending time of the service message.

S5: Upon reception of an application message for the sending token from the calling party, the control node determines an application result of the sending token of the calling party according to whether the maximum service processing capability of a called party is reached, and feeds the application result back to the corresponding calling party.

The control node may judge, according to whether a service condition of a current called party reaches the set maximum service processing capability, whether to allocate a token to a service message for which a sending token is applied for, to achieve control over service processing flow of the calling party. For example, the control node determines an application result of concurrency tokens according to the number of current concurrent links and the set maximum number of concurrent links that can be maintained between the calling party and the called party. If the number of current concurrent links does not reach the maximum number of concurrent links, the control node may send concurrency tokens to service massages according to a time sequence in which the applications for the concurrency tokens are received. Then the application result may be sent to the calling party. Through the control by the control node over data of the concurrent links, a sending token may be allocated to the service message when the maximum service processing capability of the called party has not been reached, to maximize utilization of the service processing capability of the called party and improve the message processing efficiency.

If the current service flow has reached the maximum service processing capability of the called party, for example, reached the maximum number of concurrent links, it may be set that the application for a sending token of the service message fails, and a result of application failure may be returned to the corresponding calling party. In this case, for the service message of which the sending token application fails, a sending token may be applied for again after dormancy for a predetermined time. The dormancy time of the calling party may be set according to message processing requirements.

S6: When the received application result of the sending token of the service message is success, the calling party sends the service message of which the sending token is successfully applied for.

After the application for the sending token is successful, the service message of the calling party may be sent to the called party. As described above, for the service message of which the sending token application fails, a sending token may be applied for again after dormancy for a predetermined time.

According to the message processing method of the present application, a calling party may effectively output service messages at a uniform frequency by setting a sending time for each service message. At the same time, a set control node controls the sending time of the service message. In this way, the present application can spread centralized message processing at the control node to various calling parties by making the calling parties output service messages at a fixed frequency and controlling the service flow of the called party, which greatly reduces the message processing burden of the control node, can effectively avoid the problem of single-point performance bottleneck of message processing, and improve the capability of processing sent messages. The control node can maximize a service system processing capability of the called party in a uniform and stable manner without exceeding the service system processing capability of the called party, and improve system processing performance and the running stability of the system.

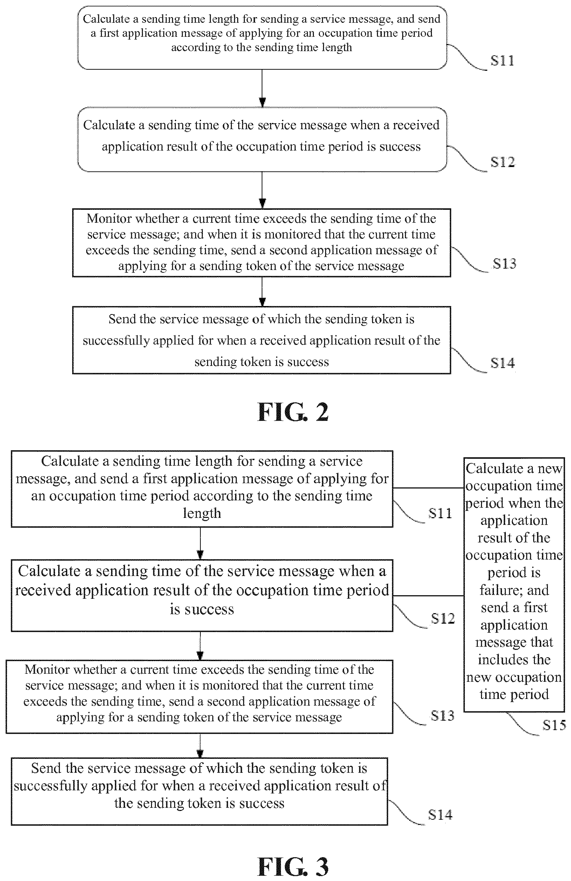

The message processing method according to the present application may be applied to, but not limited to, message processing of calling parties in a cluster mode. Specifically, the present application further provides a message processing method. FIG. 2 is a schematic method flowchart of an embodiment of the message processing method according to the present application. As shown in FIG. 2, the method may include:
S11: A sending time length for sending a service message is calculated, and a first application message of applying for an occupation time period is sent according to the sending time length.
S12: A sending time of the service message is calculated when a received application result of the occupation time period is success.
S13: It is monitored whether a current time exceeds the sending time of the service message; and a second application message of applying for a sending token of the service message is sent when it is monitored that the current time exceeds the sending time.
S14: When a received application result of the sending token is success, the service message of which the sending token is successfully applied for is sent.

The sent first application message or second application message may be sent by a calling party, and received and processed, for example, by a TAIR counting control node. The present application does not exclude other message processing apparatuses or functional modules or the like from receiving and processing the first or second application message. Specifically, reference may be made to other embodiments in the present application for processing on the message for the occupation time period, monitoring of the sending moment, processing on the message for the sending token, and the like in this embodiment. Details are not described herein.

As described previously, the present application may provide a manner of calculating the occupation time period. Specifically, in another embodiment of the message processing method according to the present application, the step of sending an application message of applying for an occupation time period according to the sending time length may include:
Sill: A latest occupation moment of a control node is acquired, and a first application message that takes the acquired latest occupation moment plus the sending time length as the occupation time period is sent to the control node.

Reference may be made to the implementation and related descriptions of S101 in the present application for the specific implementation process of the time period calculated from the acquired latest occupation moment of the control node and the sending time length in this embodiment.

In another embodiment of the message processing method according to the present application, if the application for the occupation time period fails, when receiving an application result indicating that the application for the occupation time period fails, the calling party may attempt to send an application again. FIG. 3 is a schematic method flowchart of another embodiment of the message processing method according to the present application. Specifically, as shown in FIG. 3, in another embodiment of the message processing method, the method may further include:
S15: A new occupation time period is calculated according to the acquired updated latest occupation moment and the sending time length when the received application result of the occupation time period is failure; and a first application message that includes the new occupation time period is sent.

The failure of the application for the occupation time period generally may include that an occupation time period applied for according to a currently acquired latest occupation moment has been preempted by another calling party. Generally, for example, after the application for use of a new occupation time period in the control node succeeds, the latest occupation time may be updated, so that a subsequent calling party can apply for a sending time resource once again. In this embodiment, when the application for the occupation time period fails, an updated latest occupation moment may be acquired, and a new occupation time period is calculated again according to the updated latest occupation moment in combination with the sending time length. Then, the calling party may continue to send a first application message that includes the new occupation time period, to continue applying for an occupation time period. Definitely, a threshold of the number of times of application failure may also be set; if the application of the calling party for an occupation time period fails multiple times, when the number of times reaches the threshold, the application may be stopped or an alarm, a prompt, statistics and other information may be sent out, and processing is performed according to other set methods.

According to the message processing method of the present application, when receiving an application result indicating that the application for the sending token fails, the calling party may apply for a sending token again, or may apply for a sending token again after being dormant for a fixed time. Generally, the failure of the application for the sending token generally may include that current service flow reaches the maximum service processing capability of the called party. For example, the number of current concurrent links reaches the maximum number of concurrent links that can be maintained between the calling party and the called party. In this case, access of an ongoing service is allowed only when the called party has idle service processing capability after finishing processing on one or more service messages. In the existing processing mechanism, the calling party generally sends a service message or sends a message token to the called party or the control node according to its own service message generation situation. In the event that the maximum processing capability of the called party is reached, the called party does not allow access of any service, and failure of the service message or the application for the sending token often may lead to blind sending of a new application, thus causing unnecessary data processing burden. In another message processing method provided in the present application, for example, when the application of the calling party for the sending token fails, a dormancy time of the calling party may be indicated according to a closest available time of the sending token determined by the control node, so that the calling party applies for the sending token again when a valid application time of the sending token arrives. This not only can improve the success rate of the application for the sending token, but also can avoid repeatedly sending the application multiple times to compete for the sending token when the sending token cannot be applied for, and avoid increasing additional overheads.

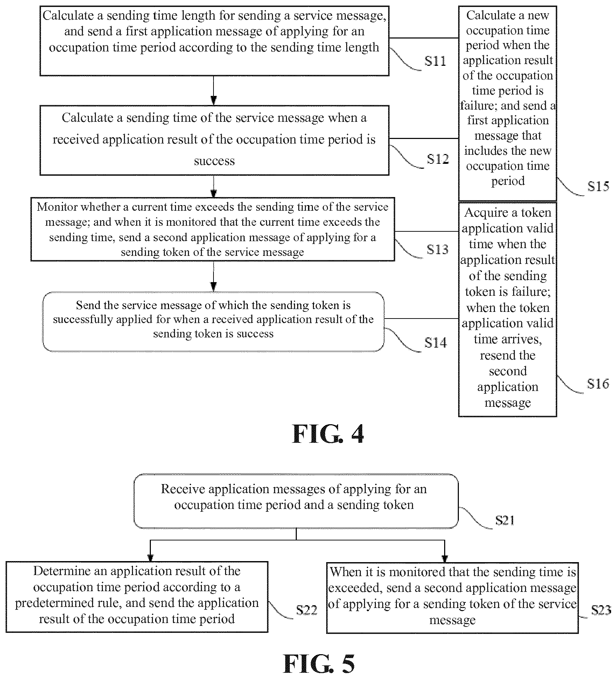

FIG. 4 is a schematic method flowchart of another embodiment of the message processing method according to the present application. As shown in FIG. 4, in another embodiment of the message processing method according to the present application, the method may further include:
S16: A token application valid time is acquired when the received application result of the sending token is failure; when the token application valid time arrives, the second application message for the service message of which sending token application result is failure is resent.

Definitely, in addition to the aforementioned situation where the maximum processing capability of the called party is reached, the method of the foregoing embodiment may also be employed in other application scenarios where the sending token cannot be applied for temporarily, for example, an application scenario where the sending token is being used by another calling party and has not been released, or an application scenario where other restrictions are set for the application for the sending token.

In the message processing method according to the present application, the control node may process a message sent by the calling party, for example, allocate an occupation time of the occupation time period of the service message or allocate a sending token or other resources according to the maximum service processing capability of the calling party. Specifically, the present application may provide a message processing method, and the method may include:
S21: Application messages of applying for an occupation time period and a sending token are received.
S22: An application result of the occupation time period is determined according to a predetermined rule, and the application result of the occupation time period is sent.
S23: An application result of the sending token is determined according to whether the maximum service processing capability of a called party is reached, and the application result of the sending token is sent.

FIG. 5 is a schematic method flowchart of an embodiment of the message processing method according to the present application. In this embodiment, a control node may receive application messages for an occupation time period and a sending token sent by a calling party and then perform corresponding data processing, to return a processing result to the calling party. In the foregoing embodiment, a predetermined rule according to which the control node determines an application result of the occupation time period may be set according to message processing requirements. For example, resources of the occupation time period may be allocated according to a latest occupation moment of the control node and an occupation time period application message first received at the latest occupation moment, or the allocation may be carried out according to an occupation time period application priority set in the application message. Specifically, setting may be made according to actual message processing requirements. This embodiment may not limit a specific manner.

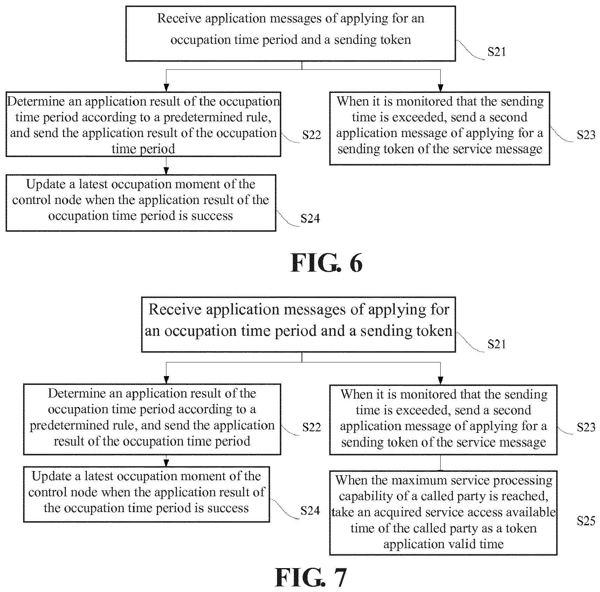

FIG. 6 is a schematic method flowchart of another embodiment of the message processing method according to the present application. As shown in FIG. 6, in another embodiment of the message processing method according to the present application, the method may include:
S24: A latest occupation moment of the control node is updated when the application result of the occupation time period is success.

After allocating an occupation time period to a service message of the calling party, the control node may update a latest occupation moment, so that other calling parties that fail to send applications for an occupation time period can apply for sending time resources again according to the updated latest occupation moment.

FIG. 7 is a schematic method flowchart of another embodiment of the message processing method according to the present application. As shown in FIG. 7, in another embodiment of the message processing method according to the present application, the method may include:
S25: When the maximum service processing capability of the called party is reached, a closest service access available time of the called party is acquired, and the closest service access available time is taken as a token application valid time.

The set token application valid time may include the closest service access available time of the called party, and may also include other set token application valid times. The providing the token valid time for the calling party may include providing a query interface or sending the token application valid time to the calling party.

The message processing method in the foregoing embodiment of the present application can spread centralized message processing at the control node to various calling parties by making the calling parties output service messages uniformly and stably and controlling the service flow of the called party, which greatly reduces the message processing burden of the control node, can effectively avoid the problem of single-point performance bottleneck of message processing, and improve the capability of processing sent messages. Moreover, the method of the present application can maximize service system processing capability of the called party in a uniform and stable manner without exceeding the service system processing capability of the called party, and improve system processing performance and stability of system running of the called party.

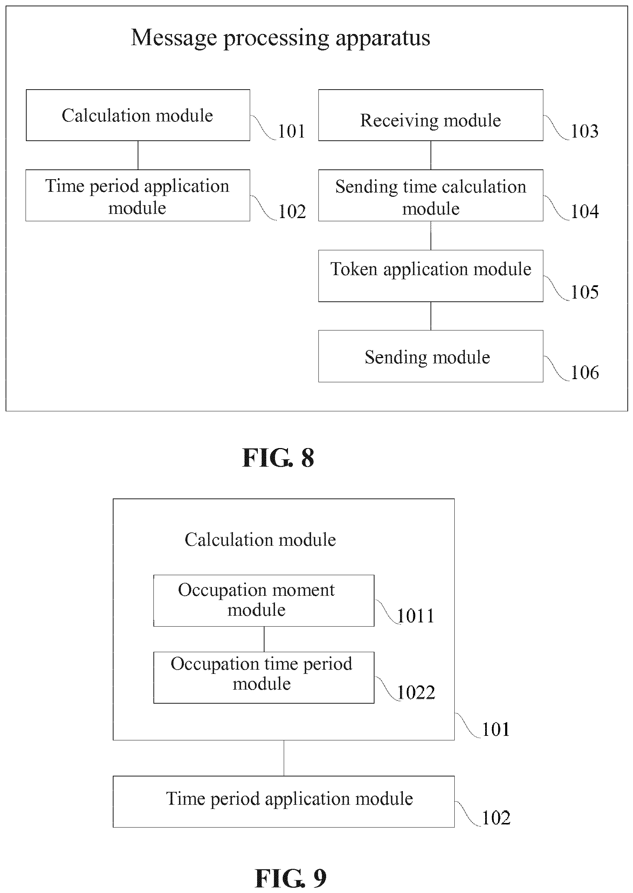

Based on the message processing method in the foregoing embodiments of the present application, the present application provides a message processing apparatus. FIG. 8 is a schematic diagram of a modular structure of an embodiment of the message processing apparatus according to the present application. The message processing terminal may include a PC terminal, a mobile electronic device, a server, a distributed network terminal, and apparatuses, modules, applications and the like that include executable programs stored on a physical medium. Specifically, as shown in FIG. 8, the message processing apparatus may include:
a calculation module 101, which may be configured to calculate a sending time length for sending a service message, and calculate an occupation time period for sending the service message based on the sending time length;
a time period application module 102, which may be configured to send a first application message of applying for the occupation time period;
a receiving module 103, which may be configured to receive messages of application results of the occupation time period and a sending token;
a sending time calculation module 104, which may be configured to calculate a sending time of the service message based on that a received message indicating that the application result of the occupation time period is success;
a token application module 105, which may be configured to monitor whether a current time exceeds the sending time of the service message; and when monitoring that the current time exceeds the sending time, send a second application message of applying for a sending token of the service message; and
a sending module 106, which may be configured to send the service message of which the sending token is successfully applied for based on a received message indicating that the application result of the sending token is success.

The message processing apparatus provided in the present application can output service messages uniformly and stably based on a sending time of each service message calculated according to an occupation time period applied for, and can maximize service output through a sending token. The message processing apparatus of the present application can effectively improve the running stability of a called party system of service messages, and at the same time can reduce the burden of the control node and avoid the problem of single-point performance bottleneck of service message processing of the control node.

FIG. 9 is a schematic diagram of a modular structure of an embodiment of a calculation module 101 in the message processing apparatus according to the present application. As shown in FIG. 9, the calculation module 101 may include:
an occupation moment module 1011, which may be configured to acquire a latest occupation moment of a control node; and
an occupation time period module 1012, which may be configured to take a time period calculated from the acquired latest occupation moment plus the sending time length as the occupation time period.

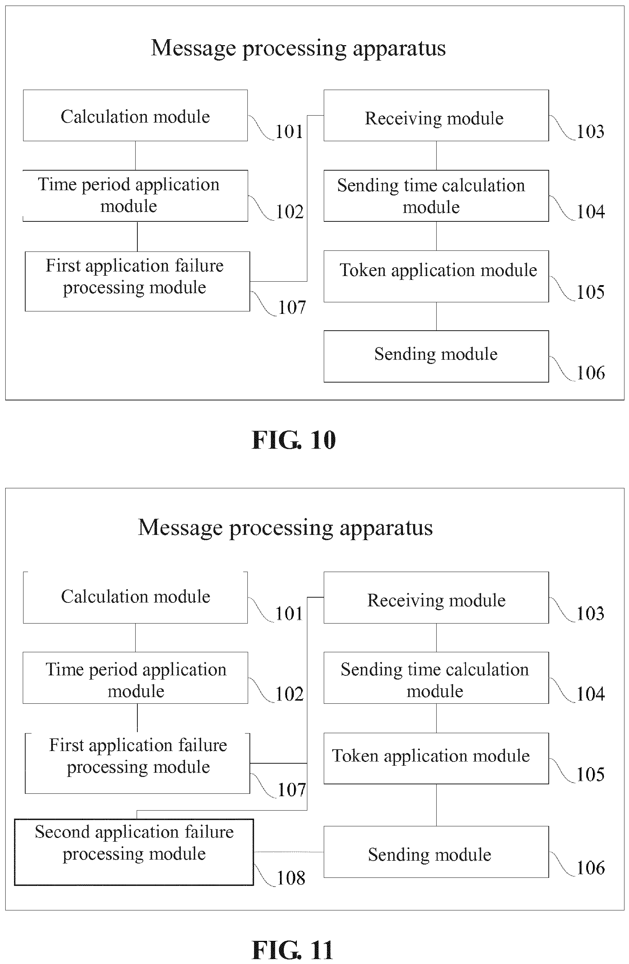

FIG. 10 is a schematic diagram of a modular structure of another embodiment of the message processing apparatus according to the present application. As shown in FIG. 10, the apparatus may further include:
a first application failure processing module 107, which may be configured to calculate a new occupation time period according to the latest occupation moment acquired by the calculation module when the received application result of the occupation time period is failure; and send a first application message that includes the new occupation time period to the time period application module 102.

In this embodiment, when the application for the occupation time period fails, an updated latest occupation moment may be acquired, and a new occupation time period is calculated according to the updated latest occupation moment in combination with the sending time length. Then, a first application message that includes the new occupation time period can be sent continuously, to continue applying for an occupation time period. Definitely, a threshold of the number of times of application failure may also be set; if the application of the calling party for an occupation time period fails multiple times, when the number of times reaches the threshold, the application may be stopped or an alarm, a prompt, statistics and other information may be sent out, and processing is performed according to other set methods.

FIG. 11 is a schematic diagram of a modular structure of another embodiment of the message processing apparatus according to the present application. As shown in FIG. 11, the apparatus may further include:
a second application failure processing module 108, which may be configured to acquire a token application valid time when the received application result of the sending token is failure; when the token application valid time arrives, issue, to the sending module 106, an instruction of resending a second application message of the service message of which the sending token is unsuccessfully applied for.

In the message processing apparatus of the foregoing embodiment, for example, when the application of the calling party for the sending token fails, a dormancy time of the calling party may be indicated according to a closest available time of the sending token determined by the control node, so that the calling party applies for the sending token again when a valid application time of the sending token arrives. This not only can improve the success rate of the application for the sending token, but also can avoid repeatedly sending the application multiple times to compete for the sending token when the sending token cannot be applied for, and avoid increasing additional overheads.

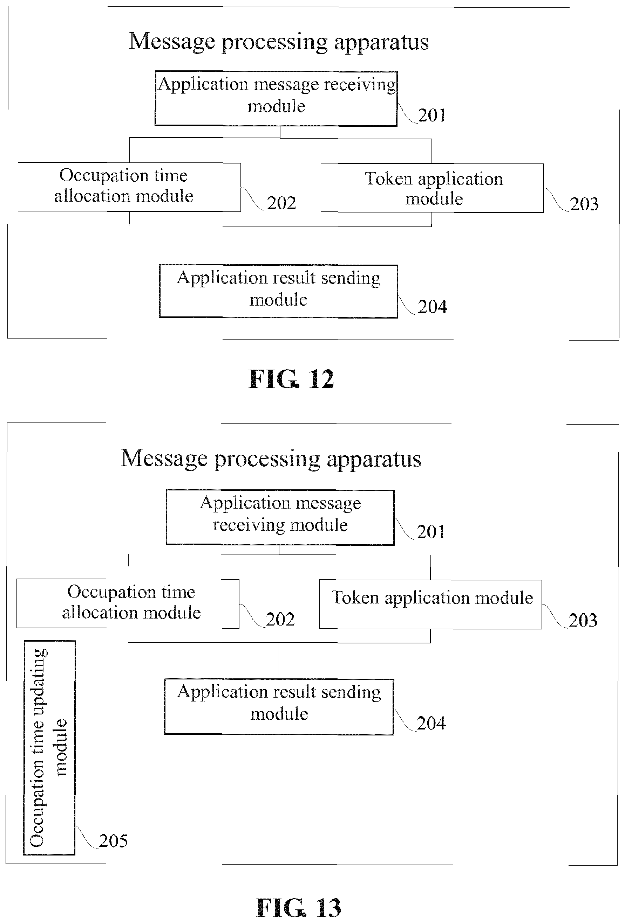

The processing party of the first application message or the second application message, for example, the control node, may perform processing, such as allocation of message resources and control over the number of links, on message output terminals according to a preset message processing method, to achieve uniform output of service messages at the message output terminals and maximize utilization of service processing capability of the called party without going beyond the maximum service processing capability of the called party. The present application may further provide a message processing apparatus, for example, a control node in a cluster mode in a specific embodiment. An implementation method of the apparatus is as shown in FIG. 12, and specifically, the apparatus may include:
an application message receiving module 201, which may be configured to receive an application message that includes an occupation time period; and further configured to receive an application message for a sending token;
an occupation time allocation module 202, which may be configured to allocate an occupation time period of a service message to the occupation time period in the application message according to a predetermined rule;
a token allocation module 203, which may be configured to allocate a sending token according to a current service flow and the maximum service processing capability of a called party; and
an application result sending module 204, which may be configured to send a message indicating an application result of the occupation time period; and further configured to send a message indicating an application result of the sending token.

FIG. 12 is a schematic diagram of a modular structure of an embodiment of the message processing apparatus according to the present application. In this embodiment, the message processing apparatus may be, for example, a control node, which may receive application messages of an occupation time period and a sending token sent by a calling party, then perform corresponding data processing, and return a processing result to the calling party. In the foregoing embodiment, a predetermined rule according to which the control node determines an application result of the occupation time period may be set according to message processing requirements. For example, resources of the occupation time period may be allocated according to a latest occupation moment of the control node and an occupation time period application message first received at the latest occupation moment, or allocation may be carried out according to an occupation time period application priority set in the application message. Specifically, setting may be made according to actual message processing requirements. This embodiment may not limit a specific manner.

FIG. 13 is a schematic diagram of a modular structure of another embodiment of the message processing apparatus according to the present application. As shown in FIG. 13, the apparatus may further include:
an occupation moment updating module 205, which may be configured to update a latest occupation moment of the occupation time allocation module 202 after the occupation time period is allocated to the service message.

After the message processing apparatus allocates the occupation time period to the service message, the occupation moment updating module 205 may update a latest occupation moment, so that other calling parties that fail to send applications for an occupation time period can apply for sending time resources again according to the updated latest occupation moment. The latest occupation moment indicates that in the message processing apparatus, time before the occupation moment has been allocated and occupied, and time after the occupation moment is available for occupation application. The unit implementing the data processing may be arranged in the occupation time allocation module 202. Definitely, in other embodiments, the unit may also be arranged in another or special module.

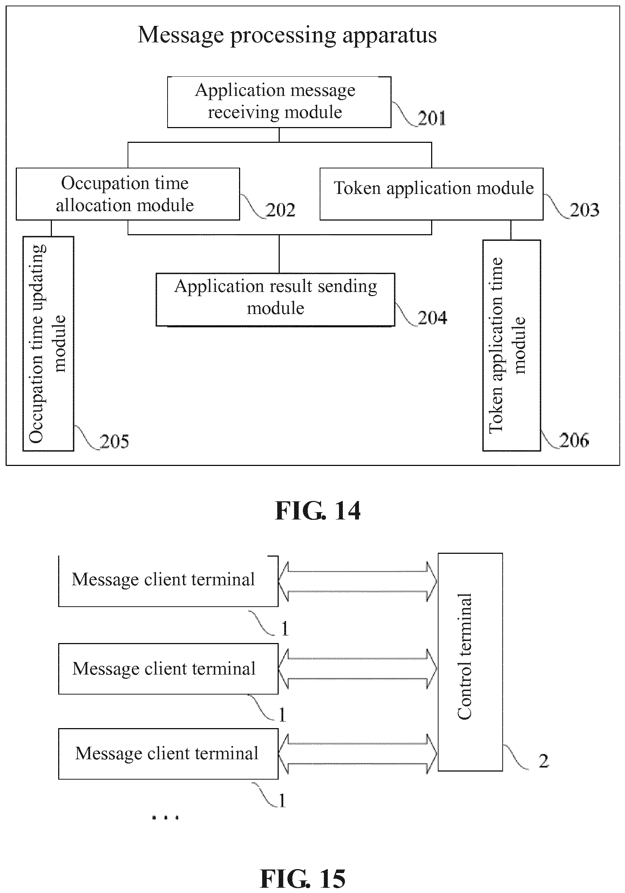

FIG. 14 is a schematic diagram of a modular structure of another embodiment of the message processing apparatus according to the present application. As shown in FIG. 14, the apparatus may further include:
a token application time module 206, which may be configured to acquire a closest service access available time of the called party when the maximum service processing capability of the called party is reached, and take the closest service access available time as a token application valid time.

In this embodiment, setting of the token application time module 206 can effectively improve the success rate of the application of the calling party for the sending token of the service message, reduce the number of times the sending token is applied for, and improve the system processing performance.

The message processing apparatus according to the present application can be used for resending concurrency control in the cluster mode by utilizing the maximum processing capability of the called party system. Definitely, the present application is not limited to message processing in the cluster mode, and may also be applicable to service processing systems for message sending control in other application scenarios. Based on the above embodiments, the present application provides a message processing system. FIG. 15 is a schematic diagram of a modular structure of a message processing system according to the present application. As shown in FIG. 15, the system may include:
a message client terminal 1, which may be configured to: send to a control terminal 2 a first application message based on a set occupation time period including a sending time length; calculate a sending time of a service message based on a received message indicating that an application result of the occupation time period is success; monitor whether a current time exceeds the sending time of the service message, and when monitoring that the current time exceeds the sending time, send to the control terminal 2 a second application message of applying for a sending token of the service message; and send the service message of which the sending token is successfully applied for based on a received message indicating that an application result of the sending token is success; and
the control terminal 2, which may be configured to: receive the first application message and the second application message sent by the message client terminal; allocate an occupation time period of the service message to the occupation time period in the first application message according to a predetermined rule; allocate a sending token to the service message in the second application message according to a current service flow and the maximum service processing capability of a called party; and send application results of the first application message and the second application message to the message client terminal.

The message processing method, apparatus and system in the present application can spread centralized message processing at the control node to various calling parties by making the calling parties output service messages uniformly and stably and controlling the service flow of the called party, which greatly reduces the message processing burden of the control node, can effectively avoid the problem of single-point performance bottleneck of message processing, and improve the capability of processing sent messages. Moreover, the method of the present application can maximize service system processing capability of the called party in a uniform and stable manner without exceeding the service system processing capability of the called party, and improve system processing performance and stability of system running.

Although descriptions about message exchange in a cluster mode, a counting control node Tair, and exchange and processing of data such as a token are mentioned in the content of the present application, the present application is not limited to the data interaction and processing which are completely standard or use the methods mentioned. The descriptions involved in the embodiments of the present application are merely applications in some embodiments of the present application, and processing methods slightly modified on the basis of some standards and methods may also implement the solutions in the embodiments of the present application. Definitely, other non-creative transformations in line with steps of the processing methods in the embodiments of the present application still can implement the same application, and details are not described herein.

Although the present application provides method operating steps as described in the embodiments or flowcharts, conventional or non-creative means may include more or fewer operating steps. The step order listed in the embodiments is merely one of lots of step execution orders, and does not represent a unique execution order. During actual execution of an actual apparatus or client terminal product, execution may be performed sequentially according to the method shown in the embodiments or drawings or parallelly (e.g., in a parallel processor or a multi-thread processing environment).

The units or modules illustrated in the above embodiments may be specifically implemented by using a computer chip or an entity, or a product having a certain function. For ease of description, when the apparatus is described, it is divided into various modules in terms of functions for respective descriptions. Definitely, when the present application is implemented, the functions of the modules may be implemented in the same or multiple software and/or hardware. For example, the sending time module is incorporated into the calculation module to calculate the sending time, and the module implementing the same function may also be implemented by a combination of multiple sub-modules or sub-units.

Those skilled in the art also know that, in addition to implementing the controller by using pure computer readable program code, the method steps may be logically programmed to enable the controller to implement the same function in the form of a logic gate, a switch, an application specific integrated circuit, a programmable logic controller and an embedded microcontroller. Therefore, such a controller may be considered as a hardware component, and apparatuses included therein and configured to implement various functions may also be considered as structures inside the hardware component. Alternatively, the apparatuses configured to implement various functions may even be considered as both software modules for implementing the method and structures inside the hardware component.

The present application may be described in a common context of a computer executable instruction executed by a computer, for example, a program module. Generally, the program module includes a routine, a program, an object, an assembly, a data structure, a class, and the like for executing a specific task or implementing a specific abstract data type. The present application may also be practiced in distributed computing environments, and in the distributed computing environments, a task is executed by using remote processing devices connected through a communications network. In the distributed computing environments, the program module may be located in a local and remote computer storage medium including a storage device.

Based on the foregoing descriptions of the implementations, those skilled in the art may clearly understand that the present application may be implemented by software plus a necessary universal hardware platform. Based on such understanding, the technical solution of the present application essentially, or the portion making contributions to the prior art may be embodied in the form of a software product. The computer software product may be stored in a storage medium, such as a ROM/RAM, a magnetic disk, or an optical disc, and include several instructions that enable a computer device (which may be a personal computer, a mobile terminal, a server, a network device, or the like) to execute the method in the embodiments or certain portions of the embodiments of the present application.

The embodiments in the specification are described progressively, identical or similar parts of the embodiments may be obtained with reference to each other, and each embodiment emphasizes a part different from other embodiments. The present application is applicable to various universal or dedicated computer system environments or configurations, such as a personal computer, a server computer, a handheld device or a portable device, a tablet device, a multi-processor system, a microprocessor-based system, a set top box, a programmable electronic device, a network PC, a minicomputer, a mainframe computer, and a distributed computing environment including any of the above systems or devices.

Although the present application is described through the embodiments, those of ordinary skill in the art should know that the present application has many variations and changes.

## Claims

1. A message processing method, wherein the method comprises:
calculating, by a calling party, a sending time length for sending a service message;
requesting an occupation time period from a control node according to the sending time length (S1);
upon reception of an application message for the occupation time period from the calling party, determining, by the control node, an application result of the occupation time period of the calling party according to a predetermined rule;
feeding the application result back to the corresponding calling party (S2);
calculating, by the calling party, a sending time of the service message when a received application result of the occupation time period is success (S3);
applying, by the calling party, for a sending token of the service message from the control node when the calling party monitors that the sending time of the service message is exceeded (S4);
upon reception of an application message for the sending token from the calling party, determining, by the control node, an application result of the sending token of the calling party according to whether the maximum service processing capability of a called party is reached;
feeding the application result back to the corresponding calling party (S5); and
sending, by the calling party, the service message of which the sending token is successfully applied for when the received application result of the sending token of the service message is success (S6).

2. The method of claim 1, wherein requesting an occupation time period from a control node according to the sending time length comprises sending a first application message requesting an occupation time period according to the sending time length (S11); and
wherein applying, by the calling party, for a sending token of the service message from the control node when the calling party monitors that the sending time of the service message is exceeded comprises, when it is monitored that the current time exceeds the sending time, sending a second application message requesting a sending token of the service message (S13).

3. The message processing method of claim 2, wherein sending a first application message requesting an occupation time period according to the sending time length comprises:
acquiring a latest occupation moment of a control node, and sending to the control node a first application message that takes the acquired latest occupation moment plus the sending time length as the occupation time period (Sill).

4. The message processing method of claim 2, wherein the method further comprises:
calculating a new occupation time period according to an acquired updated latest occupation moment and the sending time length when the received application result of the occupation time period is failure; and sending a first application message that comprises the new occupation time period (S15).

5. The message processing method of claim 2, wherein the method further comprises:
acquiring a token application valid time when the received application result of the sending token fails; when the token application valid time arrives, resending a second application message of the service message of which the sending token is unsuccessfully applied for (S16).

6. The message processing method of claim 1, wherein the method further comprises:
updating a latest occupation moment of the control node when the application result of the occupation time period is success.

7. The message processing method of claim 1, wherein the method further comprises:
when the maximum service processing capability of the called party is reached, acquiring a closest service access available time of the called party, and taking the closest service access available time as a token application valid time.

8. A message processing apparatus, wherein the apparatus comprises:
a message client terminal configured to:
send to a control terminal a first application message for an occupation time period set based on a sending time length;
calculate a sending time of a service message based on a received message indicating that an application result of the occupation time period is success;
monitor whether a current time exceeds the sending time of the service message, and when monitoring that the current time exceeds the sending time, send to the control terminal a second application message requesting a sending token of the service message; and
send the service message of which the sending token is successfully applied for based on a received message indicating that an application result of the sending token is success; and
a control terminal configured to:
receive the first application message and the second application message sent by the message client terminal; allocate an occupation time period of the service message to the occupation time period in the first application message according to a predetermined rule;
allocate a sending token to the service message in the second application message according to a current service flow and the maximum service processing capability of a called party; and
send application results of the first application message and the second application message to the message client terminal.

9. The message processing apparatus of claim 8, wherein the apparatus comprises:
a calculation module (101) configured to calculate the sending time length for sending the service message, and calculate the occupation time period for sending the service message based on the sending time length;
a time period application module (102) configured to send the first application message for the occupation time period;
a receiving module (103) configured to receive messages of the application results of the occupation time period and the sending token;
a sending time calculation module (104) configured to calculate the sending time of the service message based on the received message indicating that an application result of the occupation time period is success;
a token application module(105) configured to monitor whether the current time exceeds the sending time of the service message; and when monitoring that the current time exceeds the sending time, send the second application message requesting the sending token of the service message; and
a sending module (106) configured to send the service message of which the sending token is successfully applied for based on the received message indicating that an application result of the sending token is success.

10. The message processing apparatus of claim 9, wherein the calculation module comprises:
an occupation moment module (1011) configured to acquire a latest occupation moment of a control node; and
an occupation time period module (1022) configured to take a time period calculated from the acquired latest occupation moment plus the sending time length as the occupation time period.

11. The message processing apparatus of claim 9, wherein the apparatus further comprises:
a first application failure processing module (107) configured to calculate a new occupation time period of the service message according to the latest occupation moment acquired by the calculation module when the received application result of the occupation time period is failure; and send a first application message that comprises the new occupation time period to the time period application module.

12. The message processing apparatus of claim 9, wherein the apparatus further comprises:
a second application failure processing module (108) configured to acquire a token application valid time when the received application result of the sending token is failure; when the token application valid time arrives, issue to the sending module an instruction of resending a second application message of the service message of which the sending token is unsuccessfully applied for.

13. The message processing apparatus of claim 8, wherein the apparatus further comprises:
an application message receiving module (201) configured to receive an application message that comprises an occupation time period; and further configured to receive an application message for a sending token;
an occupation time allocation module (202) configured to allocate an occupation time period of a service message to the occupation time period in the application message according to a predetermined rule;
a token allocation module (203) configured to allocate a sending token according to a current service flow and the maximum service processing capability of a called party; and
an application result sending module (204) configured to send a message indicating an application result of the occupation time period; and further configured to send a message indicating an application result of the sending token.

14. The message processing apparatus of claim 13, wherein the apparatus further comprises:
an occupation moment updating module (205) configured to update a latest occupation moment of the occupation time allocation module after the occupation time period is allocated to the service message.

15. The message processing apparatus of claim 13, wherein the apparatus further comprises:
a token application time module (206) configured to acquire a closest service access available time of the called party when the maximum service processing capability of the called party is reached, and take the closest service access available time as a token application valid time.

## Patentansprüche

1. Nachrichtenverarbeitungsverfahren, wobei das Verfahren umfasst:
Berechnen einer Sendezeitlänge zum Senden einer Dienstnachricht durch einen anrufenden Teilnehmer;
Anfordern einer Belegungszeitdauer von einem Steuerknoten gemäß der Sendezeitlänge (S1);
nach dem Empfang einer Antragsnachricht für die Belegungszeitdauer von dem anrufenden Teilnehmer Ermitteln eines Antragsergebnisses der Belegungszeitdauer des anrufenden Teilnehmers gemäß einer vorbestimmten Regel durch den Steuerknoten;
Rückkoppeln des Antragsergebnisses an den entsprechenden anrufenden Teilnehmer (S2);
Berechnen einer Sendezeit der Dienstnachricht durch den anrufenden Teilnehmer, wenn ein empfangenes Antragsergebnis de Belegungszeitdauer positiv ist (S3);
Beantragen eines Sende-Tokens der Dienstnachricht von dem Steuerknoten durch den anrufenden Teilnehmer, wenn der anrufende Teilnehmer beobachtet, dass die Sendezeit der Dienstnachricht überschritten ist (S4);
nach dem Empfang einer Antragsnachricht für das Sende-Token von dem anrufenden Teilnehmer Ermitteln eines Antragsergebnisses des Sende-Tokens des anrufenden Teilnehmers durch den Steuerknoten, je nachdem, ob die maximale Dienstverarbeitungskapazität eines anrufenden Teilnehmers erreicht ist;
Rückkoppeln des Antragsergebnisses an den entsprechenden anrufenden Teilnehmer (S5); und
Senden der Dienstnachricht, deren Sende-Token erfolgreich beantragt wurde, durch den anrufenden Teilnehmer, wenn das empfangene Antragsergebnis des Sende-Tokens der Dienstnachricht positiv ist (S6).

2. Verfahren nach Anspruch 1, wobei das Anfordern einer Belegungszeitdauer von einem Steuerknoten gemäß der Sendezeitlänge das Senden einer ersten Antragsnachricht umfasst, die eine Belegungszeitdauer gemäß der Sendezeitlänge anfordert (S11); und wobei das Beantragen eines Sende-Tokens der Dienstnachricht von dem Steuerknoten durch den anrufenden Teilnehmer, wenn der anrufende Teilnehmer beobachtet, dass die Sendezeit der Dienstnachricht überschritten ist, wenn beobachtet wird, dass die aktuelle Zeit die Sendezeit überschreitet, das Senden einer zweiten Antragsnachricht umfasst, die ein Sende-Token der Dienstnachricht anfordert (S13).

3. Nachrichtenverarbeitungsverfahren nach Anspruch 2, wobei das Senden einer ersten Antragsnachricht, die eine Belegungszeitdauer gemäß einer Sendezeitlänge anfordert, umfasst:
Erfassen eines spätesten Belegungszeitpunkts eines Steuerknotens und Senden einer ersten Antragsnachricht an den Steuerknoten, die den erfassten Belegungszeitpunkt plus die Sendezeitlänge als Belegungszeitdauer übernimmt (S111).

4. Nachrichtenverarbeitungsverfahren nach Anspruch 2, wobei das Verfahren ferner umfasst:
Berechnen einer neuen Belegungszeitdauer gemäß eines erfassten aktualisierten spätesten Belegungszeitpunkts und der Sendezeitlänge, wenn das empfangene Antragsergebnis der Belegungszeitdauer negativ ist;
und Senden einer ersten Antragsnachricht, die die neue Belegungszeitdauer umfasst (S15).

5. Nachrichtenverarbeitungsverfahren nach Anspruch 2, wobei das Verfahren ferner umfasst:
Erfassen einer gültigen Zeit für einen Token-Antrag, wenn das empfangene Antragsergebnis des Sende-Tokens negativ ist; wenn die gültige Zeit für einen Token-Antrag eintrifft, erneutes Senden einer zweiten Antragsnachricht der Dienstnachricht, für die das Sende-Token erfolglos beantragt wurde (S16).

6. Nachrichtenverarbeitungsverfahren nach Anspruch 1, wobei das Verfahren ferner umfasst:
Aktualisieren eines spätesten Belegungszeitpunkts des Steuerknotens, wenn das Antragsergebnis der Belegungszeitdauer positiv ist.

7. Nachrichtenverarbeitungsverfahren nach Anspruch 1, wobei das Verfahren ferner umfasst:
wenn die maximale Dienstverarbeitungskapazität des anrufenden Teilnehmers erreicht ist, Erfassen einer verfügbaren nächsten Zeit des Dienstzugangs des anrufenden Teilnehmers und Annehmen der verfügbaren nächsten Zeit des Dienstzugangs als gültige Zeit für einen Token-Antrag.

8. Nachrichtenverarbeitungsvorrichtung, wobei die Vorrichtung umfasst:
ein Nachrichten-Client-Endgerät, das konfiguriert ist, um:
eine erste Antragsnachricht für eine Belegungszeitdauer, die basierend auf einer Sendezeitlänge eingestellt ist, an ein Steuerendgerät zu senden;
eine Sendezeit einer Dienstnachricht basierend auf einer empfangenen Nachricht zu berechnen, die angibt, dass ein Antragsergebnis der Belegungszeitdauer positiv ist;
zu beobachten, ob eine aktuelle Zeit die Sendezeit der Dienstnachricht überschreitet, und wenn beobachtet wird, dass die aktuelle Zeit die Sendezeit überschreitet, eine zweite Antragsnachricht, die ein Sende-Token der Dienstnachricht anfordert, an das Steuerendgerät zu senden; und die Dienstnachricht zu senden, deren Sende-Token basierend auf einer empfangenen Nachricht, die angibt, dass ein Antragsergebnis des Sende-Tokens positiv ist, erfolgreich beantragt wurde; und
ein Steuerendgerät, das konfiguriert ist, um:
die erste Antragsnachricht und die zweite Antragsnachricht, die von dem Nachrichten-Client-Endgerät gesendet werden, zu empfangen; eine Belegungszeitdauer der Dienstnachricht der Belegungszeitdauer in der ersten Antragsnachricht gemäß einer vorbestimmten Regel zuzuweisen;
ein Sende-Token der Dienstnachricht in der zweiten Antragsnachricht gemäß einem aktuellen Dienstablauf und der maximalen Dienstverarbeitungskapazität eines anrufenden Teilnehmers zuzuweisen; und
Antragsergebnisse der ersten Antragsnachricht und der zweiten Antragsnachricht an das Nachrichten-Client-Endgerät zu senden.

9. Nachrichtenverarbeitungsvorrichtung nach Anspruch 8, wobei die Vorrichtung umfasst:
ein Berechnungsmodul (101), das konfiguriert ist, um die Sendezeitlänge zum Senden der Dienstnachricht zu berechnen und um die Belegungszeitdauer zum Senden der Dienstnachricht basierend auf der Sendezeitlänge zu berechnen;
ein Antragsmodul für die Zeitdauer (102), das konfiguriert ist, um die erste Antragsnachricht für die Belegungszeitdauer zu senden;
ein Empfangsmodul (103), das konfiguriert ist, um Nachrichten der Antragsergebnisse der Belegungszeitdauer und des Sende-Tokens zu empfangen;
ein Berechnungsmodul der Sendezeit (104), das konfiguriert ist, um die Sendezeit der Dienstnachricht basierend auf der empfangenen Nachricht zu berechnen, die angibt, dass ein Antragsergebnis der Belegungszeitdauer positiv ist;
ein Token-Antragsmodul (105), das konfiguriert ist, um zu beobachten, ob eine aktuelle Zeit die Sendezeit der Dienstnachricht überschreitet; und wenn beobachtet wird, dass die aktuelle Zeit die Sendezeit überschreitet, die zweite Antragsnachricht zu senden, die das Sende-Token der Dienstnachricht anfordert; und
ein Sendemodul (106), das konfiguriert ist, um die Dienstnachricht zu senden, deren Sende-Token erfolgreich beantragt wurde, basierend auf der empfangenen Nachricht, die angibt, dass ein Antragsergebnis des Sende-Tokens positiv ist.

10. Nachrichtenverarbeitungsvorrichtung nach Anspruch 9, wobei das Berechnungsmodul umfasst:
ein Belegungszeitpunktmodul (1011), das konfiguriert ist, um einen spätesten Belegungszeitpunkt eines Steuerknotens zu erfassen; und
ein Belegungszeitdauermodul (1022), das konfiguriert ist, um einen Zeitraum, der aus dem erfassten spätesten Belegungszeitpunkt plus der Sendezeitlänge berechnet wird, als Belegungszeitdauer zu übernehmen.

11. Nachrichtenverarbeitungsvorrichtung nach Anspruch 9, wobei die Vorrichtung ferner umfasst:
ein erstes Verarbeitungsmodul eines erfolglosen Antrag (107), das konfiguriert ist, um eine neue Belegungszeitdauer der Dienstnachricht gemäß dem spätesten Belegungszeitpunkt zu berechnen, der von dem Berechnungszeitraum erfasst wird, wenn das empfangene Antragsergebnis der Belegungszeitdauer negativ ist; und eine erste Antragsnachricht zu senden, die die neue Belegungszeitdauer für das Zeitdauer-Antragsmodul umfasst.

12. Nachrichtenverarbeitungsvorrichtung nach Anspruch 9, wobei die Vorrichtung ferner umfasst:
ein zweites Verarbeitungsmodul eines erfolglosen Antrags (108), das konfiguriert ist, um eine gültige Zeit eines Token-Antrags zu erfassen, wenn das empfangene Antragsergebnis des Sende-Tokens negativ ist; wenn die gültige Zeit für den Token-Antrag eintrifft, Ausgeben einer Anweisung zum erneuten Senden einer zweiten Antragsnachricht der Dienstnachricht, für die das Sende-Token erfolglos beantragt wurde, an das Sendemodul.

13. Nachrichtenverarbeitungsvorrichtung nach Anspruch 8, wobei die Vorrichtung ferner umfasst:
ein Empfangsmodul einer Antragsnachricht (201), das konfiguriert ist, um eine Antragsnachricht zu empfangen, die eine Belegungszeitdauer umfasst;
und das ferner konfiguriert ist, um eine Antragsnachricht für ein Sende-Token zu empfangen;
ein Zuweisungsmodul für eine Belegungszeit (202), das konfiguriert ist, um eine Belegungszeitdauer einer Dienstnachricht der Belegungszeitdauer in der Antragsnachricht gemäß einer vorbestimmten Regel zuzuweisen;
ein Token-Zuweisungsmodul (203), das konfiguriert ist, um ein Sende-Token gemäß einem aktuellen Dienstablauf und der maximalen Dienstverarbeitungskapazität eines anrufenden Teilnehmers zuzuweisen; und
ein Sendemodul eines Antragsergebnisses (204), das konfiguriert ist, um eine Nachricht zu senden, die ein Antragsergebnis der Belegungszeitdauer angibt; und das ferner konfiguriert ist, um eine Nachricht zu senden, die ein Antragsergebnis des Sende-Tokens angibt.

14. Nachrichtenverarbeitungsvorrichtung nach Anspruch 13, wobei die Vorrichtung ferner umfasst:
ein Aktualisierungsmodul des Belegungszeitpunkts (205), das konfiguriert ist, um einen spätesten Belegungszeitpunkt des Zuweisungsmoduls der Belegungszeit zu aktualisieren, nachdem die Belegungszeitdauer der Dienstnachricht zugewiesen wurde.

15. Nachrichtenverarbeitungsvorrichtung nach Anspruch 13, wobei die Vorrichtung ferner umfasst:
ein Zeitmodul der Token-Antrag (206), das konfiguriert ist, um eine verfügbare nächste Zeit für den Dienstzugang des anrufenden Teilnehmers zu erfassen, wenn die maximale Dienstverarbeitungskapazität des anrufenden Teilnehmers erreicht ist, und um die verfügbare nächste Zeit für den Dienstzugang als gültige Zeit des Token-Antrags anzunehmen.

## Revendications

1. Procédé de traitement de messages, dans lequel le procédé comprend :
le calcul, par un appelant, d'une durée d'envoi pour envoyer un message de service ;
la demande d'une période d'occupation à un nœud de commande conformément à la durée d'envoi (S1) ;
à la réception d'un message de sollicitation pour la période d'occupation provenant de l'appelant, la détermination, par le nœud de commande, d'un résultat de sollicitation de la période d'occupation de l'appelant conformément à une règle prédéterminée ;
le renvoi du résultat de sollicitation à l'appelant correspondant (S2) ;
le calcul, par l'appelant, d'une heure d'envoi du message de service lorsqu'un résultat de sollicitation reçu de la période d'occupation indique une réussite (S3) ;
la sollicitation, par l'appelant, d'un jeton d'envoi du message de service auprès du nœud de commande lorsque l'appelant surveille que l'heure d'envoi du message de service est dépassée (S4) ;
à la réception d'un message de sollicitation pour le jeton d'envoi provenant de l'appelant, la détermination, par le nœud de commande, d'un résultat de sollicitation du jeton d'envoi de l'appelant selon que la capacité de traitement de services maximale d'un appelé est atteinte ou non ;
le renvoi du résultat de sollicitation à l'appelant correspondant (S5) ; et
l'envoi, par l'appelant, du message de service dont le jeton d'envoi a été sollicité avec succès lorsque le résultat de sollicitation reçu du jeton d'envoi du message de service indique une réussite (S6).

2. Procédé selon la revendication 1, dans lequel la demande d'une période d'occupation à un nœud de commande conformément à la durée d'envoi comprend l'envoi d'un premier message de sollicitation demandant une période d'occupation conformément à la durée d'envoi (S11) ; et
dans lequel la sollicitation, par l'appelant, d'un jeton d'envoi du message de service auprès du nœud de commande lorsque l'appelant surveille que l'heure d'envoi du message de service est dépassée comprend, lorsque la surveillance indique que l'heure actuelle dépasse l'heure d'envoi, l'envoi d'un second message de sollicitation demandant un jeton d'envoi du message de service (S13).

3. Procédé de traitement de messages selon la revendication 2, dans lequel l'envoi d'un premier message de sollicitation demandant une période d'occupation conformément à la durée d'envoi comprend :
l'acquisition d'un dernier moment d'occupation d'un nœud de commande et l'envoi au nœud de commande d'un premier message de sollicitation qui considère le dernier moment d'occupation acquis plus la durée d'envoi comme la période d'occupation (S111).

4. Procédé de traitement de messages selon la revendication 2, le procédé comprenant en outre :
le calcul d'une nouvelle période d'occupation conformément à un dernier moment d'occupation mis à jour et acquis et à la durée d'envoi lorsque le résultat de sollicitation reçu de la période d'occupation indique un échec ;
et l'envoi d'un premier message de sollicitation qui comprend la nouvelle période d'occupation (S15).

5. Procédé de traitement de messages selon la revendication 2, le procédé comprenant en outre :
l'acquisition d'une période de validité de sollicitation de jeton lorsque le résultat de sollicitation reçu du jeton d'envoi indique un échec ; lorsque la période de validité de sollicitation de jeton est atteinte, le renvoi d'un second message de sollicitation du message de service dont le jeton d'envoi a été sollicité sans succès (S16).

6. Procédé de traitement de messages selon la revendication 1, le procédé comprenant en outre :
la mise à jour d'un dernier moment d'occupation du nœud de commande lorsque le résultat de sollicitation de la période d'occupation indique une réussite.

7. Procédé de traitement de messages selon la revendication 1, le procédé comprenant en outre :
lorsque la capacité de traitement de services maximale de l'appelé est atteinte, l'acquisition d'une période de disponibilité d'accès au service la plus proche de l'appelé et la considération de la période de disponibilité d'accès au service la plus proche comme une période de validité de sollicitation de jeton.

8. Appareil de traitement de messages, l'appareil comprenant :
un terminal client de messagerie configuré pour :
envoyer à un terminal de commande un premier message de sollicitation pour une période d'occupation définie en fonction d'une durée d'envoi ;
calculer une heure d'envoi d'un message de service en fonction d'un message reçu indiquant qu'un résultat de sollicitation de la période d'occupation est une réussite ;
surveiller si une heure actuelle dépasse ou non l'heure d'envoi du message de service, et lorsque la surveillance indique que l'heure actuelle dépasse l'heure d'envoi, envoyer au terminal de commande un second message de sollicitation demandant un jeton d'envoi du message de service ; et
envoyer le message de service dont le jeton d'envoi a été sollicité avec succès en fonction d'un message reçu indiquant qu'un résultat de sollicitation du jeton d'envoi est une réussite ; et
un terminal de commande configuré pour :
recevoir le premier message de sollicitation et le second message de sollicitation envoyés par le terminal client de messagerie ; allouer une période d'occupation du message de service à la période d'occupation dans le premier message de sollicitation conformément à une règle prédéterminée ;
allouer un jeton d'envoi au message de service dans le second message de sollicitation conformément à un flux de service actuel et à la capacité de traitement de services maximale d'un appelé ; et
envoyer des résultats de sollicitation du premier message de sollicitation et du second message de sollicitation au terminal client de messagerie.

9. Appareil de traitement de messages selon la revendication 8, l'appareil comprenant :
un module de calcul (101) configuré pour calculer la durée d'envoi pour envoyer le message de service, et calculer la période d'occupation pour envoyer le message de service en fonction de la durée d'envoi ;
un module de sollicitation de période (102) configuré pour envoyer le premier message de sollicitation pour la période d'occupation ;
un module de réception (103) configuré pour recevoir des messages des résultats de sollicitation de la période d'occupation et du jeton d'envoi ;
un module de calcul d'heure d'envoi (104) configuré pour calculer l'heure d'envoi du message de service en fonction du message reçu indiquant qu'un résultat de sollicitation de la période d'occupation est une réussite ;
un module de sollicitation de jeton (105) configuré pour surveiller si l'heure actuelle dépasse ou non l'heure d'envoi du message de service ; et,
lorsque la surveillance indique que l'heure actuelle dépasse l'heure d'envoi, envoyer le second message de sollicitation demandant le jeton d'envoi du message de service ; et
un module d'envoi (106) configuré pour envoyer le message de service dont le jeton d'envoi a été sollicité avec succès en fonction du message reçu indiquant qu'un résultat de sollicitation du jeton d'envoi est une réussite.

10. Appareil de traitement de messages selon la revendication 9, dans lequel le module de calcul comprend :
un module de moment d'occupation (1011) configuré pour acquérir un dernier moment d'occupation d'un nœud de commande ; et
un module de période d'occupation (1022) configuré pour considérer une période calculée à partir du dernier moment d'occupation acquis plus la durée d'envoi comme la période d'occupation.

11. Appareil de traitement de messages selon la revendication 9, l'appareil comprenant en outre :
un premier module de traitement d'échec de sollicitation (107) configuré pour calculer une nouvelle période d'occupation du message de service conformément au dernier moment d'occupation acquis par le module de calcul lorsque le résultat de sollicitation reçu de la période d'occupation indique un échec ; et envoyer un premier message de sollicitation qui comprend la nouvelle période d'occupation au module de sollicitation de période.

12. Appareil de traitement de messages selon la revendication 9, l'appareil comprenant en outre :
un second module de traitement d'échec de sollicitation (108) configuré pour acquérir une période de validité de sollicitation de jeton lorsque le résultat de sollicitation reçu du jeton d'envoi indique un échec ; lorsque la période de validité de sollicitation de jeton est atteinte, envoyer au module d'envoi une instruction de renvoi d'un second message de sollicitation du message de service dont le jeton d'envoi a été sollicité sans succès.

13. Appareil de traitement de messages selon la revendication 8, l'appareil comprenant en outre :
un module de réception de message de sollicitation (201) configuré pour recevoir un message de sollicitation qui comprend une période d'occupation ; et configuré en outre pour recevoir un message de sollicitation pour un jeton d'envoi ;
un module d'allocation de temps d'occupation (202) configuré pour allouer une période d'occupation d'un message de service à la période d'occupation dans le message de sollicitation conformément à une règle prédéterminée ;
un module d'allocation de jeton (203) configuré pour allouer un jeton d'envoi conformément à un flux de service actuel et à la capacité de traitement de services maximale d'un appelé ; et
un module d'envoi de résultat de sollicitation (204) configuré pour envoyer un message indiquant un résultat de sollicitation de la période d'occupation ; et configuré en outre pour envoyer un message indiquant un résultat de sollicitation du jeton d'envoi.

14. Appareil de traitement de messages selon la revendication 13, l'appareil comprenant en outre :
un module de mise à jour de moment d'occupation (205) configuré pour mettre à jour un dernier moment d'occupation du module d'allocation de temps d'occupation après que la période d'occupation a été allouée au message de service.

15. Appareil de traitement de messages selon la revendication 13, l'appareil comprenant en outre :
un module de période de sollicitation de jeton (206) configuré pour acquérir une période de disponibilité d'accès au service la plus proche de l'appelé lorsque la capacité de traitement de services maximale de l'appelé est atteinte, et considérer la période de disponibilité d'accès au service la plus proche comme une période de validité de sollicitation de jeton.
